(19) Europäisches Patentamt
European Patent Office
Office européen des brevets

(11) **EP 1 835 500 A1**

(12) **EUROPEAN PATENT APPLICATION**
published in accordance with Art. 158(3) EPC

(43) Date of publication:
**19.09.2007 Bulletin 2007/38**

(51) Int Cl.:
***G11B 7/257*** (2006.01)     ***G11B 7/26*** (2006.01)
***G11B 7/254*** (2006.01)

(21) Application number: **05793268.3**

(22) Date of filing: **14.10.2005**

(86) International application number:
**PCT/JP2005/018965**

(87) International publication number:
**WO 2006/057116 (01.06.2006 Gazette 2006/22)**

(84) Designated Contracting States:
**DE FR GB**

(30) Priority: **29.11.2004 JP 2004343482**

(71) Applicant: **MATSUSHITA ELECTRIC INDUSTRIAL CO., LTD.**
**Osaka 571-8501 (JP)**

(72) Inventors:
• **TSUCHINO, Akio,**
**Matsushita El. Ind. Co.,Ltd.**
**1-ch.,Chuo-ku,Osaka-shi, Osaka 540-6319 (JP)**

• **NISHIHARA, Takashi,**
**Matsushita El. Ind. Co.,Ltd.**
**1-ch.,Chuo-ku,Osaka-shi, Osaka 540-6319 (JP)**
• **KOJIMA, Rie,**
**Matsushita El. Ind. Co.,Ltd.**
**1-ch.,Chuo-ku,Osaka-shi, Osaka 540-6319 (JP)**

(74) Representative: **Eisenführ, Günther**
**Eisenführ, Speiser & Partner**
**Patentanwälte Rechtsanwälte**
**Postfach 10 60 78**
**28060 Bremen (DE)**

(54) **INFORMATION RECORDING MEDIUM AND METHOD FOR MANUFACTURING SAME**

(57)     The present invention makes it possible to obtain a low-cost information recording medium that has fewer layers and has high signal quality and excellent repeated re-write characteristics, without using sulfur as a material for the dielectric layers. Thus, an information recording medium for recording or reproducing information, said information recording medium comprises a layer that contains Ce-F.

Fig.1

**Description**

[Field of the Invention]

The present invention relates to an information recording medium for recording or reproducing information by optical or electrical means, and to a method for manufacturing this medium.

[Background Information]

A Blue-ray disc is an example of an optical information recording medium. This recording medium has a layer structure, for example, in which a reflective layer, a third interface layer, a second dielectric layer, a second interface layer, a recording layer, a first interface layer, a first dielectric layer, and a cover layer are laminated in that order starting from a substrate.

The function of the first dielectric layer and second dielectric layer is to adjust the optical distance (equal to the refractive index times the physical distance) and thereby enhance the optical absorption efficiency of the recording layer, increase the difference between the reflectivity of the crystal phase and the reflectivity of the amorphous phase, and increase the signal amplitude. They also have the function of protecting the recording layer from moisture and so forth. An example of the material used for these dielectric layers is a mixture of 80 mol% ZnS and 20 mol% $SiO_2$ (hereinafter referred to as $(ZnS)_{80}(SiO_2)_{20}$) (see Patent Document 1, for example). This material is an amorphous material that has low thermal conductivity, a high refractive index, and high transparency. Also, it can be formed into a film at high speed, and has excellent mechanical properties and moisture resistance. Because it has such excellent characteristics, $(ZnS)_{80}(SiO_2)_{20}$ has been put to use as a material that is extremely well suited to forming a dielectric layer.

The first interface layer and second interface layer are provided for the purpose of preventing the elemental sulfur in the $(ZnS)_{80}(SiO_2)_{20}$ from diffusing into the recording layer when the recording layer is irradiated with a laser beam and repeated re-write recording is performed. If sulfur diffuses into the recording layer, it markedly decreases the reflectivity of the recording medium, and the repeated re-write characteristics become markedly worse. A material containing $ZrO_2$ and $Cr_2O_3$, for example, has been disclosed as a material for these interface layers (see Patent Document 2, for example). This is an excellent material that contains no sulfur, has high transparency to a laser in the blue-purple wavelength band (near 405 nm), and, because of its high melting point, also has high heat resistance.

Optically, the reflective layer increases the amount of light absorbed by the recording layer, and thermally, it quickly disperses the heat produced by the recording layer, and therefore has the function of quenching the recording layer and making it easier to render the layer amorphous. It also functions to protective the recording layer, the interface layers, and the dielectric layers from the environment in which they are used. Therefore, silver alloys with high thermal conductivity are suitable as the material for this reflective layer.

The function of the third interface layer is to prevent the sulfur in the $(ZnS)_{80}(SiO_2)_{20}$ from diffusing into the reflective layer when the $(ZnS)_{80}(SiO_2)_{20}$ is applied to the second dielectric layer and a silver alloy is applied to the reflective layer. If sulfur diffuses into the reflective layer, it reacts with the silver in the silver alloy, producing $Ag_2S$. This $Ag_2S$ is produced even in environments of normal temperature and humidity, so the reliability of the recording medium is markedly reduced. The material used for this third interface layer can be a dielectric other than a sulfide, metal other than silver, semi-metal, or a semiconductor.

The inventors discovered other problems with the above-mentioned prior art when a third interface layer was provided using a dielectric containing sulfur for the second dielectric layer.

First, the heat produced in the recording layer may not disperse well. If cooling is more efficient in an information recording medium, the change to an amorphous phase is easier, and better recording marks are obtained. Silver is the element with the highest thermal conductivity, but as mentioned above, a silver alloy cannot be used in the third interface layer. Consequently, providing a third interface layer decreases the cooling of the recording layer. Also, if a material different from that of the interface layers is used to create a multilayer structure or if the film thickness is increased for the purpose of more effectively preventing the inter-diffusion of elements, the cooling effect will be decreased even more, quenching will be more difficult, and there will be a decrease in signal quality.

Second, providing a third interface layer may increase the number of layers constituting the recording medium. Increasing the number of layers drives up the required investment in equipment for manufacturing the recording medium and increases the manufacturing takt time, which leads to higher costs of the recording medium.

[Patent Document 1] Japanese Patent H06-090808
[Patent Document 2] Japanese Laid-Open Patent Application 2003-323743

[Disclosure of the Invention]

The present invention solves the above problems and provides a dielectric material that contains no sulfur, has good transparency to a laser in the blue-purple wavelength band, and has excellent moisture resistance. Furthermore, if this dielectric material is applied to the second dielectric layer, there will be no need for a third interface layer, and an information recording medium with high signal quality and excellent repeated re-write characteristics can be provided.

The present invention is an information recording medium for recording or reproducing information, said information recording medium comprising a layer that contains Ce-F.

This will enable to obtain an information recording medium with high signal quality and excellent repeated re-write characteristics.

The information recording medium according to the present invention, wherein the layer that contains Ce-F is a dielectric layer.

This will enable to obtain dielectric materials having good transparency and moisture resistance.

The information recording medium according to the present invention, comprising a substrate, a reflective layer, the dielectric layer, and a recording layer, in that order, and the reflective layer and the dielectric layer are in contact.

This will enable be no need for an interface layer, and to obtain an information recording medium with high signal quality and excellent repeated re-write characteristics.

The information recording medium according to the present invention, said information recording medium including two or more information layers, wherein at least one of the information layers comprises a substrate, a reflective layer, the dielectric layer, and a recording layer, in that order, the reflective layer and the dielectric layer are in contact, and the two or more information layers are separated from one another by an optical separation layer.

This will enable be no need for an interface layer even including two or more information layers, and to obtain an information recording medium with high signal quality and excellent repeated re-write characteristics.

The information recording medium according to the present invention, wherein the dielectric layer contains at least 10 mol% Ce F.

This will enable to prevent degradation of record sensitivity

Also, it is preferable that the dielectric layer further contains a dielectric material D 1 that is an oxide of at least one element selected from the group consisting of aluminum, silicon, titanium, zinc, gallium, yttrium, zirconium, indium, lanthanum, cerium, dysprosium, ytterbium, hafnium, and tantalum.

This will enable to obtain an information recording medium with higher signal quality and more excellent repeated re-write characteristics.

Further it is preferable that the dielectric layer further contains a dielectric material D1 that is an oxide of at least one element selected from the group consisting of silicon, gallium, yttrium, zirconium, indium, dysprosium, hafnium, and tantalum.

This will enable to obtain an information recording medium with higher signal quality and more excellent repeated re-write characteristics.

It is preferable that the dielectric layer is expressed by the formula:

$$(Ce–F)_{x1}D1_{100–x1},$$

where x1 satisfies $10 \leq x1 \leq 90$.

This will enable to present degradation of adhesion and record sensitivity

Alternatively, it is preferable that the dielectric layer further contains a dielectric material D2 that is an nitride of at least one element selected from the group consisting of aluminum, boron, yttrium, and silicon.

This will enable to obtain an information recording medium with higher signal quality and more excellent repeated re-write characteristics.

It is preferable that the dielectric layer is expressed by the formula:

$$(Ce–F)_{x1}D2_{100–x1},$$

where x1 satisfies $10 \leq x1 \leq 90$.

This will enable to prevent degradation of record sensitivity

Alternatively, it is preferable that the dielectric layer further contains a dielectric material D3 that is a fluoride of at least one element selected from the group consisting of magnesium, yttrium, lanthanum, gadolinium, terbium, and ytterbium.

This will enable to obtain an information recording medium with higher signal quality and more excellent repeated re-write characteristics.

It is preferable that the dielectric layer further contains a dielectric material D3 that is a fluoride of at least one element selected from the group consisting of yttrium, and lanthanum.

This will enable to obtain an information recording medium with higher signal quality and more excellent repeated re-write characteristics.

It is preferable that the dielectric layer is expressed by the formula:

$$(Ce–F)_{x1}D3_{100–x1},$$

where x1 satisfies $10 \leq x1 \leq 90$.

This will enable to prevent degradation of record sensitivity

Alternatively, it is preferable that the dielectric layer further contains a plurality of a dielectric material D1 that is an oxide of at least one element selected from the group consisting of aluminum, silicon, titanium, zinc, gallium, yttrium, zirconium, indium, lanthanum, cerium, dysprosium, ytterbium, hafnium, and tantalum; a dielectric material D2 that is an nitride of at least one element selected from the group consisting of aluminum, boron, yttrium, and silicon; and a dielectric material D3 that is a fluoride of at least one element selected from the group consisting of magnesium, yttrium, lanthanum, gadolinium, terbium, and ytterbium.

This will enable to obtain an information recording medium with higher signal quality and more excellent repeated re-write characteristics.

It is preferable that the dielectric layer is expressed by the formula:

$$(Ce-F)_{x1}D1_{x2} D1_{100–x1–x2},$$

where D is a dielectric material of at least one selected from the group consisting of the dielectric material D2 and the dielectric material D3), and x1 and x2 satisfy $10 \leq x1 \leq 90$ and $50 \leq x1 + x2 < 100$.

This will enable to prevent degradation of record sensitivity

It is preferable that the dielectric layer is expressed by the formula:

$$(Ce-F)_{x1}D2_{x3} D3_{100–x1–x3},$$

where x1 and x3 satisfy $10 \leq x1 \leq 90$ and $50 \leq x1 + x3 < 100$.

This will enable to prevent degradation of record sensitivity

The present invention is a method for manufacturing an information recording medium for recording or reproducing information, comprising a substrate, a reflective layer, a dielectric layer, and a recording layer, in that order, wherein the dielectric layer is formed so as to be in contact with the reflective layer, using a sputtering target that contains Ce-F.

This will enable be no need for an interface layer, and to obtain an information recording medium with high signal quality and excellent repeated re-write characteristics.

It is preferable that the sputtering target contains any one of dielectric materials of a dielectric material D1 that is an oxide of at least one element selected from the group consisting of aluminum, silicon, titanium, zinc, gallium, yttrium, zirconium, indium, lanthanum, cerium, dysprosium, ytterbium, hafnium, and tantalum; a dielectric material D2 that is an nitride of at least one element selected from the group consisting of aluminum, boron, yttrium, and silicon; and a dielectric material D3 that is a fluoride of at least one element selected from the group consisting of magnesium, yttrium, lanthanum, gadolinium, terbium, and ytterbium.

This will enable be no need for an interface layer, and to obtain an information recording medium with higher signal quality and more excellent repeated re-write characteristics.

The present invention makes it possible to obtain a low-cost information recording medium that has fewer layers and has high signal quality and excellent repeated re-write characteristics, without using sulfur as a material for the dielectric layers.

[Brief Description of the Drawings]

FIG. 1 is a partial cross section of an information recording medium 1 in Embodiment 1 of the present invention; and
FIG. 2 is a partial cross section of an information recording medium 2 in Embodiment 2 of the present invention; and
FIG. 3 is a partial cross section of an information recording medium 3 in Embodiment 3 of the present invention; and
FIG. 4 is a simplified diagram of the partial structure of a recording and reproduction apparatus that performs the recording and reproduction of information to and from the information recording medium of the present invention.

[Description of the sign]

| 1,2,3,45 | information recording medium |
| 301, 302 | information layer |
| 4 | recording and reproduction apparatus |
| 11 | substrate |
| 12, 33 | reflective layer |
| 13, 34 | second dielectric layer |
| 14 | second interface layer |
| 15, 35 | recording layer |
| 16 | first interface layer |
| 17, 37 | first dielectric layer |
| 18 | cover layer |
| 19 | energy beam (laser beam) |
| 31 | optical separation layer |
| 32 | transmissivity adjustment layer |
| 36 | interface layer |
| 41 | spindle motor |
| 42 | semiconductor laser |
| 43 | optical head |
| 44 | objective lens |
| 46 | laser beam. |

[Description of the preferred embodiments]

The information recording medium of the present invention comprises a layer containing Ce-F. There are no particular restrictions on this layer, but it has dielectric characteristics, excellent moisture resistance, and high transparency to a laser in the blue-purple wavelength band. The cerium and fluorine are preferably in the form of a stoichiometric compound, but may instead be in the form of a compound that is not in a stoichiometric ratio. Also, these may be in the form of a compound containing elemental cerium and fluorine as well as other elements. These materials preferably have dielectric characteristics.
Embodiments of the present invention will now be described through reference to the drawings.

Embodiment 1

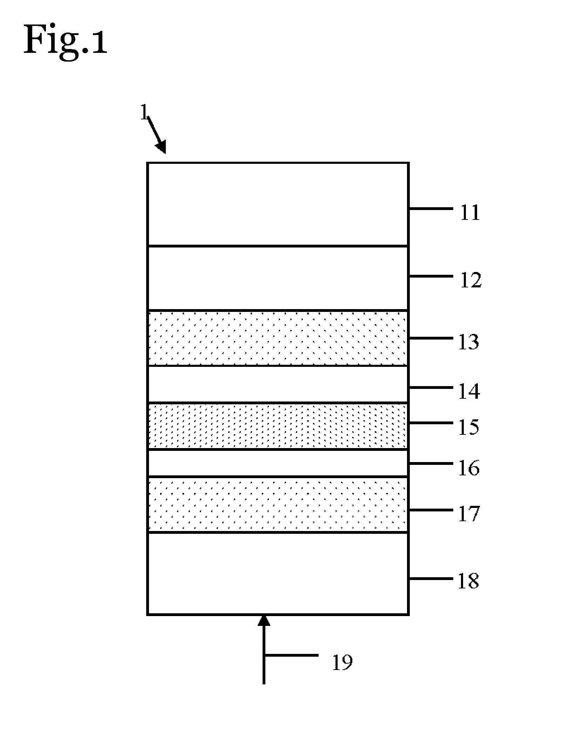

An example of an information recording medium that uses a laser beam to record and reproduce information will be described as Embodiment 1 of the present invention. FIG. 1 is a partial cross section of this information recording medium.
The information recording medium 1 shown in FIG. 1 comprises a substrate 11 on which a reflective layer 12, a second dielectric layer 13, a second interface layer 14, a recording layer 15, a first interface layer 16, a first dielectric layer 17, and a cover layer 18 are laminated in that order. This information recording medium 1 is irradiated with a recording/reproduction-use energy beam (generally a laser beam) 19 from the first dielectric layer 17 side.
The cover layer 18 is composed, for example, of dielectric or a resin such as a photosetting resin (and especially a UV-setting resin) or a slow-acting thermosetting resin, and preferably absorbs little of the laser beam being used. Polycarbonate, amorphous polyolefin, polymethyl methacrylate (PMMA), or another such resin, or glass may be used for the cover layer 18. When one of these materials is used, the cover layer 18 is formed, for example, by bonding it to the first dielectric layer 17 with a photosetting resin (and especially a UV-setting resin), a slow-acting thermosetting resin, or another such resin.

The substrate 11 is a disk-shaped, transparent substrate. Polycarbonate, amorphous polyolefin, PMMA, or another such resin, or glass may be used for the substrate 11, for example. A guide groove for guiding the laser beam may be formed if necessary on the surface of the substrate 11 on the recording layer 15 side. The opposite side of the substrate 11 from the recording layer 15 is preferably smooth. The thickness of the substrate 11 is about 500 to 1300 μm, but particularly when the thickness of the cover layer 18 is about 100 μm (a thickness that allows for good recording and reproduction at an NA of 0.85), the thickness of the substrate 11 is preferably between 1050 and 1150 μm.

The recording layer 15 is composed, for example, of a material that undergoes a reversible phase change between crystal and amorphous phases when irradiated with a laser beam. An example of this material is one expressed by the formula $Ge_{y1}M1_{y2}M2_{y3}Te_{100-(y1+y2+y3)}$ (atom%). A material such as this makes it possible to form a recording film that has a stable amorphous phase and a large signal amplitude, and has little increase in melting point or decrease in crystallization rate. M1 is an element selected from among antimony and bismuth. M2 is an element selected from among Si, Ti, V, Fe, Co, Ni, Cu, Zr, Nb, Mo, Se, Ru, Rs, Pd, Mn, Ag, Al, Cr, Sn, Ga, In, Ta, Dy, Gd, Td, Os, Ir, W, Pt, and Au. The y1 preferably satisfies $30 \leq y1 \leq 50$, and even more preferably $40 \leq y1 \leq 48$. The y2 preferably satisfies $0 \leq y2 \leq 20$. The y3 preferably satisfies $0 \leq y3 \leq 20$. Also, $40 \leq y1 + y2 + y3 \leq 60$ is preferably satisfied. To obtain good recording characteristics, the thickness of the recording layer 15 is preferably within a range of 5 to 15 nm. If the recording layer 15 is too thick, there will be a greater thermal effect on adjacent areas due to the diffusion of heat in the in-plane direction. If the recording layer 15 is too thin, though, the reflectivity of the information recording medium 1 will be low, so the thickness is preferably between 8 and 12 nm. The recording layer 15 can also be formed using a material that undergoes irreversible phase change. TeOx + M3 (where M3 is an element such as palladium or germanium) can be used favorably, for example, as a material that undergoes irreversible phase change. If the recording layer is made from a material that undergoes irreversible phase change, the result will be a write-once type of information recording medium that can be written to only one time, but the present invention can be favorably applied even to an information recording medium such as this, because the problems with recording sensitivity and signal preservation will be reduced. The film thickness is preferably from 5 to 15 nm.

The material of the reflective layer 12 can be, for example, silver, gold, copper, aluminum, or another single metal with high thermal conductivity, or it can be an alloy of these, or Al-Cr, Al-Ti, Au-Pd, Au-Cr, Ag-Pd, Ag-Pd-Cu, Ag-Pd-Ti, Ag-Ru-Au, Ag-Nd-Au, Ag-Nd-Cu, Ag-In-Sn, or Cu-Si. Of these, silver and its alloys are preferably as the material of the reflective layer 12 because of their particularly high thermal conductivity. The thickness of the reflective layer 12 is preferably between 30 and 200 nm. This is because the heat dispersal effect will not be adequate if the film is too thin, and the recording sensitivity of the information recording medium 1 will decrease if the film is too thick.

The second interface layer 14 and the first interface layer 16 serve as barriers that prevent the diffusion of elements or the admixture of moisture into the recording layer. Also, because they are provided next to the recording layer 15, they serve to raise or lower the crystallization rate of the recording layer, and it is desirable for them to have excellent adhesion to the recording layer 15, which is composed of a chalcogenide material. These interface layers are preferably made from a material that absorbs little light, and examples of materials that can be used for the interface layers 14 and 16 include $ZrO_2$ $HfO_2$ $SiO_2$ $Cr_2O_3$, $Ga_2O_3$, $In_2O_3$, $Y_2O_3$, and other such oxides, C-N, Ti-N, Zr-N, Nb-N, Ta-N, Si-N, Ge-N, Cr-N, Al-N, Ge-Si-N, Ge-Cr-N and other nitrides, SiC and other such carbides, and $YF_3$ and other such fluorides. A mixture selected from among these may also be used. The thickness of the interface layers 14 and 16 is preferably from 1 to 10 nm. The interface layers will not have an adequate effect as a barrier if they are too thin, and this could lead to the diffusion of elements or the admixture of moisture into the recording layer, resulting in inferior signal quality. On the other hand, it is undesirable for these layers to be too thick because this will excessively raise or lower the crystallization rate of the recording layer, which adversely affects recording and reproduction characteristics. Therefore, the thickness is even more preferably 3 to 7 nm.

The first dielectric layer 17 serves to protect the recording layer 15 from moisture and the like, to adjust the optical distance and thereby raise the optical absorptivity of the recording layer 15, and to increase the proportional change in the amount of reflected light before and after recording and thereby increase the signal amplitude. Examples of materials that can be used for the first dielectric layer 17 include, for example, $TiO_2$ $ZrO_2$ $HfO_2$, $ZnO$, $Nb_2O_5$ $Ta_2O_5$ $SiO_2$, $Al_2O_3$ and other oxides, and C-N, Ti-N, Zr-N, Nb-N, Ta-N, Si-N, Ge-N, Cr-N, Al-N, Ge-Si-N, Ge-Cr-N and other nitrides. ZnS and other sulfides, and SiC and other such carbides can be used. A mixture of the above materials can also be used. For instance, a mixture of ZnS and $SiO_2$ is an amorphous material that forms a film quickly, has a high refractive index, and has good mechanical strength and moisture resistance, making it an excellent choice as the material used for the first dielectric layer 17. The thickness of the first dielectric layer 17 can be determined by increasing the proportional change in the amount of reflected light between when the recording layer 15 is in a crystal phase and when in an amorphous phase, by calculation based on the matrix method, and finding the conditions under which the recording layer 15 absorbs more light. The exemplified thickness is preferably 10 nm to 160 nm.

The second dielectric layer 13 is a characteristic feature of the present invention. The second dielectric layer 13 is similar to the first dielectric layer 17 in that it serves to adjust the optical distance and thereby raise the optical absorptivity of the recording layer 15, and to increase the proportional change in the amount of reflected light before and after recording and thereby increase the signal amplitude. It also serves to quickly disperse the heat generated by the recording layer 15 to the reflective layer 12 and thereby cool the recording layer 15. When this heat dispersal effect is excellent, it reduces the thermal load on the recording layer 15 and yields better repeated re-write characteristics. The second dielectric layer 13 can be, for example, a material that contains Ce-F and also contains at least one material selected from among a dielectric material D1, a dielectric material D2, and a dielectric material D3. Also, Ce-F is preferably contained in an amount of at least 10 mol%, and even more preferably at least 50 mol%, in order to obtain good recording sensitivity. The first dielectric layer 17 is the same as the second dielectric layer 13 in that its thickness can be determined by calculation by matrix method. The exemplified thickness is preferably 3 to 80 nm.

Embodiment 2

Another example of an information recording medium that uses a laser beam to record and reproduce information will be described as Embodiment 2 of the present invention.

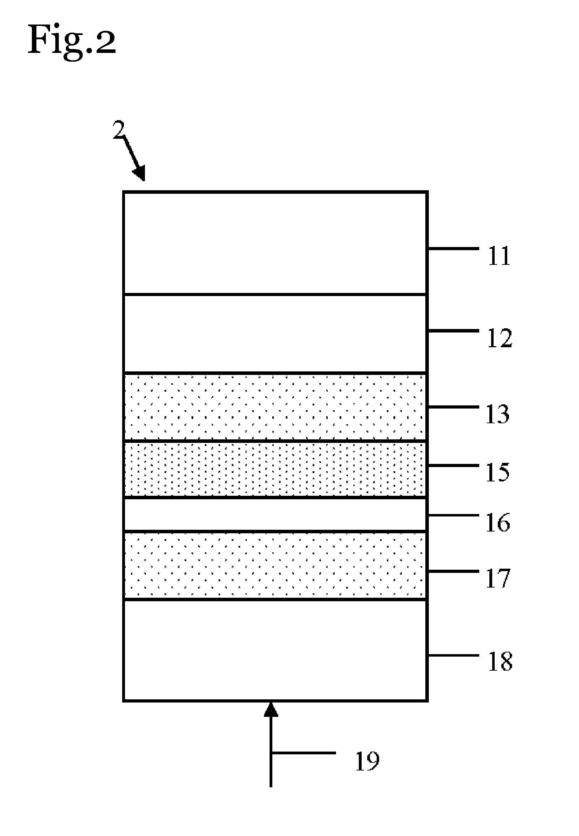

FIG. 2 is a partial cross section of this information recording medium.
The information recording medium 2 shown in FIG. 2 comprises a substrate 11 on which a reflective layer 12, a second dielectric layer 13, a recording layer 15, a first interface layer 16, a first dielectric layer 17 and a cover layer 18 are laminated in that order. This information recording medium 2 is irradiated with a recording/reproduction-use energy beam (generally a laser beam) 19 from the first dielectric layer 17 side. The substrate 11, the reflective layer 12, the recording layer 15, the first interface layer 16, the first dielectric layer 17 and the cover layer 18 are the same materials, functions and shape as that given in Embodiment 1.
The material of the second dielectric layer 13 is the same as that given in Embodiment 1. Also, because it is provided next to the recording layer 15, it serves to raise or lower the crystallization rate of the recording layer. It is desirable for this layer to have excellent adhesion to the recording layer 15, which is composed of a chalcogenide material. The thickness of the second dielectric layer 13 can be determined based on the matrix method, just as in Embodiment 1.

Embodiment 3

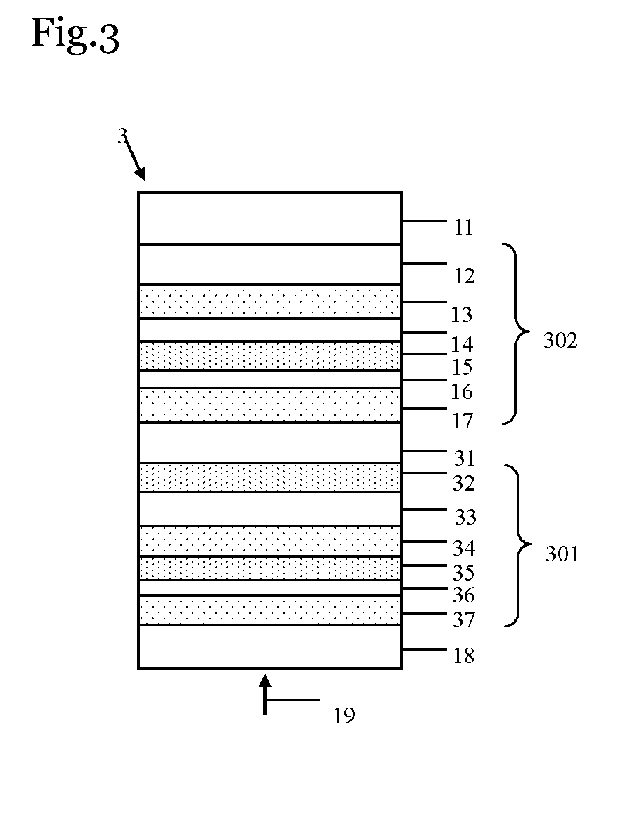

Still another example of an information recording medium that uses a laser beam to record and reproduce information will be described as Embodiment 3 of the present invention. FIG. 3 is a partial cross section of this information recording medium. The information recording medium 3 in this embodiment contains two information layers (referred to as information layer 301 and information layer 302) for recording and reproduction information, and is an information recording medium capable of recording and reproduction information to and from each information layer by irradiation of an energy beam (generally a laser beam) 19 from one side.
First, the structure of the information layer 302 will be described. The information layer 302 comprises a substrate 11 on which a reflective layer 12, a second dielectric layer 13, a second interface layer 14, a recording layer 15, a first interface layer 16, and a first dielectric layer 17 are laminated in this order. The substrate 11, the reflective layer 12, the second dielectric layer 13, the second interface layer 14, the recording layer 15, the first interface layer 16, the first dielectric layer 17 are the same materials, functions and shape, as that given in Embodiment 1, respectively. The first interface layer 16 does not necessarily have to be provided in the information layer 302.
An optical separation layer 31 is composed, for example, of dielectric or a resin such as a photosetting resin (and especially a UV-setting resin) or a slow-acting thermosetting resin, and preferably absorbs little of the laser beam being used. The optical separation layer 31 is used to differentiate the focal positions of the information layers 301 and 302, and its thickness must be at least the focal depth $\Delta Z$ determined by the wavelength $\lambda$ of the laser beam and the numerical aperture (NA) of the objective lens. If we assume the level of the optical intensity of the focal point to be 80% of that when there is no astigmatism, then $\Delta Z$ can be approximated by $\Delta Z = \lambda / \{2(NA)\}$. A guide groove may also be formed in the optical separation layer 31 on the side where the laser beam is incident.
The structure of the information layer 301 will now be described. The information layer 301 comprises a transmissivity adjustment layer 32, a reflective layer 33, a second dielectric layer 34, a recording layer 35, an interface layer 36, and a first dielectric layer 37, laminated in this order from the optical separation layer 31.
The reflective layer 33 is the same material, function and shape as the reflective layer 12 given in Embodiment 1. The interface layer 36 is the same material, function and shape as the first inter face layer 16 given in Embodiment 1.
The first dielectric layer 37 can be made the same material as the first dielectric layer 17 given in Embodiment 1, and its function and shape are also the same.
The second dielectric layer 34 is the same material as that of the second dielectric layer 13 and the second interface layer 14 given in Embodiment 1. The second dielectric layer 34 in that it serves to adjust the optical distance and thereby raise the optical absorptivity of the recording layer 35, and to increase the proportional change in the amount of reflected light before and after recording and thereby increase the signal amplitude. It also serves to quickly disperse the heat generated by the recording layer 35 to the reflective layer 33 and thereby cool the recording layer 35. Because it is provided next to the recording layer 35, it also serves to raise or lower the crystallization rate of the recording layer.

The recording layer 35 can be made of the same material as the recording layer 15 in Embodiment 1, and its function and shape are also the same, but it is preferably made as thin as possible to raise its transmissivity of the laser beam.

The transmissivity adjustment layer 32 serves to adjust the transmissivity of the information layer 301. Providing this layer raises both the transmissivity $T_c$ (%) of the information layer 301 when the recording layer is in a crystal phase, and the $T_a$ (%) of the information layer 301 when the recording layer is in an amorphous phase. More specifically, when the transmissivity adjustment layer 32 is provided, $T_c$ and $T_a$ can be increased by 2 to 10% as compared to when there is no transmissivity adjustment layer 32. This layer also serves to quickly disperse the heat generated by the recording layer 35 to the reflective layer 33 and thereby cool the recording layer 35. To raise transmissivity even higher, the refractive index n and the attenuation coefficient k of the transmissivity adjustment layer 32 preferably satisfy $n \geq 2.0$ and $k \leq 0.1$, and even more preferably satisfy $2.0 \leq n \leq 3.0$ and $k \leq 0.05$. $TiO_2$, $ZrO_2$, $HfO_2$, $ZnO_2$ $Nb_2O$ $Ta_2O$ $Al_2O_3$, $Bi_2O_3$, $Y_2O_3$, $CeO_2$ and other oxides, and Ti-N, Zr-N, Nb-N, Ta-N, Si-N, Ge-N, Cr-N, Al-N, Ge-Si-N, Ge-Cr-N and other nitrides can be used for the transmissivity adjustment layer 32, and the thickness d thereof preferably satisfies $(1/16)\lambda/n \leq d \leq (7/32)\lambda/n$ or $(9/16)\lambda/n \leq d \leq (21/32)\lambda/n$.

Finally, a cover layer 18 is formed on the first dielectric layer 37 to produce the information recording medium 3. The material, function, and shape of the cover layer 18 are the same as those in Embodiment 1.

An information recording medium in which two information layers were specified was described in this embodiment, but an information recording medium can be produced with the same structure and by the same formation method when a plurality of these information layers are provided, and this allows the capacity of the information recording medium to be increased.

Embodiment 4

An example of the method of the present invention for manufacturing an information recording medium will be described as Embodiment 4 of the present invention. Here, a method for manufacturing the information recording medium 1 described in Embodiment 1 will be described.

The reflective layer 12, the second dielectric layer 13, the second interface layer 14, the recording layer 15, the first interface layer 16, and the first dielectric layer 17 are formed in that order by sputtering, which is a vapor phase film formation method. This will be described in order below.

First, the substrate 11 (with a thickness of 1100 $\mu$m, for example) is disposed in a film formation apparatus. The reflective layer 12 is formed by using a sputtering target composed of the metal or alloy that makes up the reflective layer 12, and sputtering in an argon gas atmosphere or an atmosphere of a mixture of argon gas and a reaction gas (such as oxygen gas or nitrogen gas). When a guide groove is formed in the substrate 11, the reflective layer 12 is formed on this guide groove side.

The second dielectric layer 13 is formed by using a sputtering target composed of $CeF_3$ or a mixture thereof, and sputtering in an argon gas atmosphere or an atmosphere of a mixture of argon gas and a reaction gas. More specifically, sputtering targets of these mixtures may be expressed, for example, by the formula $(CeF_3)_{z1}D1_{100-z1}$ (mol%), the formula $(CeF_3)_{z1}D1_{z2}D_{100-z1-z2}$ (where D is at least one selected from D2 and D3), the formula $(CeF_3)_{z1}D2_{100-z1}$, the formula $(CeF_3)_{z1}D2_{z3}D3_{100-z1-z3}$, or the formula $(CeF_3)_{z1}D3_{100-z1}$. The z1, z2, and z3 preferably satisfy $10 \leq z1 \leq 90$, $50 \leq z1 + z2 < 100$, and $50 \leq z1 + z3 < 100$. Alternatively, it can be formed by using a sputtering target containing the necessary dielectrics from among $CeF_3$, D1, D2, and D3, and sputtering simultaneously using a plurality of power supplies.

The second interface layer 14 is formed by using a sputtering target composed of a mixture of the dielectrics constituting the second interface layer 14, and sputtering in an argon gas atmosphere or an atmosphere of a mixture of argon gas and a reaction gas. Alternatively, it can be formed by using a sputtering target containing the constituent metal elements, and performing reactive sputtering in an atmosphere of a mixture of argon gas and a reaction gas.

The recording layer 15 is formed by using a sputtering target composed of a Ge-M1-Te-M2 alloy according to the intended composition of the recording layer 15, and sputtering in an argon gas atmosphere, a krypton gas atmosphere, an atmosphere of a mixture of argon gas and a reaction gas, or an atmosphere of a mixture of krypton gas and a reaction gas.

The first interface layer 16 is formed by using a sputtering target composed of the compound constituting the first interface layer 16, and sputtering in an argon gas atmosphere or an atmosphere of a mixture of argon gas and a reaction gas. Alternatively, it can be formed by using a sputtering target containing the metal elements that constitute the first interface layer 16, and performing reactive sputtering in an atmosphere of a mixture of argon gas and a reaction gas.

The first dielectric layer 17 is formed by using a sputtering target composed of the compound constituting the first dielectric layer 17, and sputtering in an argon gas atmosphere or an atmosphere of a mixture of argon gas and a reaction gas. Alternatively, it can be formed by using a sputtering target containing the metal elements that constitute the first dielectric layer 17, and performing reactive sputtering in an atmosphere of a mixture of argon gas and a reaction gas.

Finally, a cover layer 18 is formed by spin-coating the first dielectric layer 17 with a resin such as a photosetting resin (and especially a UV-setting resin) or a slow-acting thermosetting resin, and then curing the resin. A disk-shaped substrate made of polycarbonate, amorphous polyolefin, polymethyl methacrylate (PMMA), or another such resin, or glass may also be used for the cover layer 18. In this case, the first dielectric layer 17 is coated with a resin such as a photosetting resin (and especially a UV-setting resin) or a slow-acting thermosetting resin, the resin is spread out evenly by spin coating, and the resin is cured.

In addition to sputtering, the various layers can be formed by vacuum vapor deposition, ion plating, CVD (Chemical Vapor Deposition), and MBE (Molecular Beam Epitaxy).

After the first dielectric layer 17 is formed, or after the cover layer 18 is formed, an initialization step of crystallizing the entire surface of the recording layer 15 may be performed as needed. This initialization can be accomplished by irradiation with a laser beam.

Embodiment 5

Another example of the method of the present invention for manufacturing an information recording medium will be described as Embodiment 5 of the present invention. Here, a method for manufacturing the information recording medium 2 described in Embodiment 2 will be described.

First, the substrate 11 (with a thickness of 1100 $\mu$m, for example) is disposed in a film formation apparatus. Then, the reflective layer 12, the second dielectric layer 13, the recording layer 15, the first interface layer 16, and the first dielectric layer 17 are formed in that order, and finally a cover layer 18 is formed. The methods for forming these layers are the same as those discussed in Embodiment 4.

After the first dielectric layer 17 is formed, or after the cover layer 18 is formed, an initialization step of crystallizing the entire surface of the recording layer 15 may be performed as needed. This initialization can be accomplished by irradiation with a laser beam.

Embodiment 6

Still another example of the method of the present invention for manufacturing an information recording medium will be described as Embodiment 6 of the present invention. Here, a method for manufacturing the information recording medium 3 described in Embodiment 3 will be described.

First, the substrate 11 (with a thickness of 1100 $\mu$m, for example) is disposed in a film formation apparatus. Then, in order to form an information layer 302, the reflective layer 12, the second dielectric layer 13, the second interface layer 14, the recording layer 15, the first interface layer 16, and the first dielectric layer 17 are formed in that order. The methods for forming these layers are the same as those discussed in Embodiment 4.

Next, a optical separation layer 31 is formed. The optical separation layer 31 can be formed by spin-coating an information layer 302 with a resin such as a photosetting resin (and especially a UV-setting resin) or a slow-acting thermosetting resin, and then curing the resin. When a guide groove is formed in the optical separation layer 31, a transfer substrate (mold) on the surface of which a groove of a specific shape has been formed is tightly applied over uncured resin, after which the substrate 11 and the transfer substrate are spin-coated and the resin is then cured. After this, the transfer substrate is peeled away from the cured resin to form a optical separation layer 31 in which a specific guide groove has been formed.

Further, the information layer 301 is formed. That is, the transmissivity adjustment layer 32, the reflective layer 33, the second dielectric layer 34, the recording layer 35, the interface layer 36, the first dielectric layer 37 and the cover layer 18 are laminated in that order.

The the transmissivity adjustment layer 32 is formed by using a sputtering target composed of a mixture of the dielectrics constituting the transmissivity adjustment layer 32, and sputtering in an argon gas atmosphere or an atmosphere of a mixture of argon gas and a reaction gas. Alternatively, the transmissivity adjustment layer 32 can be formed by using a sputtering target containing the constituent metal elements, and performing reactive sputtering in an atmosphere of a mixture of argon gas and a reaction gas.

The formation of the refractive layer 33 is the same as that of the refractive layer 12 discussed in Embodiment 4. The formation of the second dielectric layer 34 is the same as that of the second dielectric layer 13 or the second interface layer 14 discussed in Embodiment 4.

The formation of the recording layer 35 is the same as that of the recording layer 15 discussed in Embodiment 4. The formation of the first interface layer 36 is the same as that of the first interface layer 16 discussed in Embodiment 4.

The formation of the first dielectric layer 37 is the same as that of the first dielectric layer 17 discussed in Embodiment 4.

Finally, the cover layer 18 is the same as that discussed in Embodiment 4.

After the first dielectric layer 17 is formed, or after the cover layer 18 is formed, an initialization step of crystallizing the entire surface of the recording layer 15 may be performed as needed. Also, after the first dielectric layer 37 is formed, or after the cover layer 18 is formed, an initialization step of crystallizing the entire surface of the recording layer 35 may be performed as needed. This initialization can be accomplished by irradiation with a laser beam.

Embodiment 7

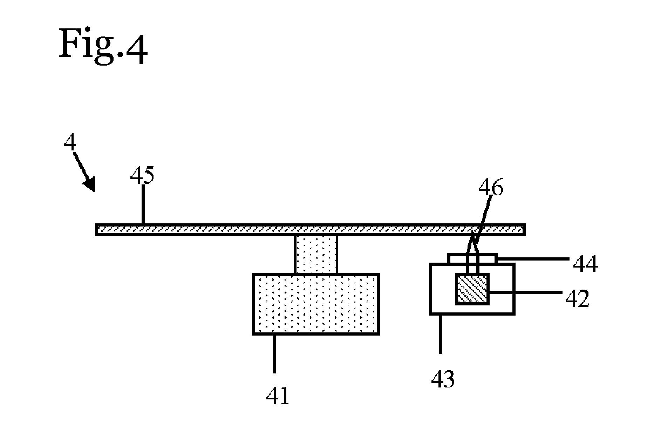

A method for recording and reproduction information to and from the an information recording medium 45 (the information recording medium 1 and 2 described in Embodiment 1 and 2) will be described as Embodiment 7 of the present invention. FIG. 4 schematically illustrates part of the structure of a recording and reproduction apparatus 4 used in the recording and reproduction method of this embodiment. The recording and reproduction apparatus 4 comprises a spindle motor 41 for rotating the information recording medium, an optical head 43 equipped with a semiconductor laser 42, and an objective lens 44 for focusing a laser beam 46 emitted from the semiconductor laser 42.

The numerical aperture (NA) of the objective lens 44 is preferably between 0.5 and 1.0 in order to adjust the spot diameter of the laser beam to a range of 0.4 to 0.7 $\mu$m. The wavelength of the laser beam is preferably 450 nm or less (and even more preferably in the blue-purple band of 350 to 450 nm). The linear velocity when information is being recorded and reproduced is preferably between 3 and 20 m/sec, at which crystallization due to reproduction light will be less apt to occur and adequate erasure will be obtained.

The recording, erasure, and over-recording of information to and from the information recording medium are accomplished by modulation of the laser beam between peak power (high power) and bias power (low power). Irradiation with a peak power laser beam forms an amorphous phase locally on the recording film of the information recording medium, and this amorphous phase becomes recorded portions (recording marks). The spaces between recording marks are irradiated with a bias power laser beam to form a crystal phase, and this crystal phase becomes erased portions. Under irradiation with a peak power laser beam, a multi-pulse that forms a pulse train is generally used. The multi-pulse may be modulated between peak power and bias power levels, or may be modulated from 0 mW up to any peak power level.

If a guide groove is provided to the substrate 11, information may be recorded either to the groove face that is farthest from the laser beam incidence side (groove), or to the groove face that is closest to the laser beam incidence side (land), or may be recorded to both.

Information is reproduced by irradiating the information recording medium with a laser beam and using a detector to take off a signal from the information recording medium. The laser beam power during reproduction is such that there will be enough reflected light to detect the recording marks on the information recording medium, without affecting the optical state of the recording marks.

The present invention will now be described in further detail by the use of working examples.

Working Example 1

An example of the information recording medium 1, and the method for its manufacture, will be described in this working example.

First, a polycarbonate substrate in which a guide groove had been formed (with a depth of 20 nm and a track pitch of 0.32 $\mu$m) was prepared as the substrate 11. An Ag-Pd-Cu film as the reflective layer 12 (80 nm), a second dielectric layer 13, $ZrO_2$-$SiO_2$-$Ga_2O_3$ films (more specifically, expressed by the formula $(ZrO_2)_{25}(SiO_2)_{25}(Ga_2O_3)_{50}$ (mol%) as a second interface layer 14 (5 nm), a Ge-Bi-Te-Sn film (more specifically, expressed by the formula $(Ge_{44.0}Bi_{3.0}Te_{50.7}Sn_{2.3}$ (atom%) as the recording layer 15 (11 nm), a $ZrO_2$-$SiO_2$-$Cr_2O_3$ film (more specifically, expressed by the formula $(ZrO_2)_{25}(SiO_2)_{25}(Cr_2O_3)_{50}$ (mol%) as the first interface layer 16 (5 nm), and a ZnS-$SiO_2$ film (more specifically, expressed by the formula $(ZnS)_{80}(SiO_2)_{20}$ (mol%) as the first dielectric layer 17 were formed in that order, by sputtering, on the substrate 11. Finally, the first dielectric layer 17 was coated with a UV-setting resin, a polycarbonate substrate (with a diameter of 120 mm and a thickness of 70 $\mu$m) was adhered thereto, and subjected to spin coating, after which the resin was cured with UV rays to form a cover layer 18.

The thickness of the second dielectric layer 13 and the first dielectric layer 17 was determined by calculation based on the matrix method. More specifically, it was determined such that when a laser beam of 405 nm was incident, the reflectivity of the information recording medium when the recording layer 15 was in the crystal phase (reflection by the mirror surface of the substrate) would be 5 to 25%, the reflectivity of the information recording medium when the recording layer 15 was in the amorphous phase (reflection by the mirror surface of the substrate) would be 1 to 5%, and the absorptivity when the recording layer 15 was in the crystal phase would be 60 to 70%.

The information recording medium 1 produced as above and a conventional information recording medium were evaluated for adhesion between the reflective layer and the second dielectric layer 13, and for repeated re-write performance.

Adhesion was evaluated by allowing the information recording medium to stand for 100 hours in a thermostatic tank at a temperature of 90°C and a relative humidity of 80%, then checking for corrosion and separation by using an optical microscope.

The repeated re-write performance was evaluated using the recording and reproduction apparatus 4 shown in FIG. 4. Information was recorded to the groove here under conditions in which the wavelength of the laser beam was 405 nm, the numerical aperture NA of the objective lens was 0.85, the linear velocity during measurement was 4.9 m/s, and the minimum mark length was 0.149 $\mu$m.

Recording to the groove was performed continuously to the same groove, using random signals from 0.149 $\mu$m (2T) to 0.596 $\mu$m (8T). The signals were reproduced at various numbers of re-writes, and the front end jitter (jitter at the front ends ofthe recording marks), rear end jitter (jitter at the rear ends of the recording marks), and the average jitter between front end jitter and rear end jitter were measured with a time interval analyzer.

Here, the number of re-writes at which jitter increased by 3% versus the value on the first write was used as the upper limit for repeated re-write performance of the information recording medium.

$CeF_3$ was used as the second dielectric layer 13 in this working example. This information recording medium was assigned disk No. 1-101.

Ce-F dielectrics were used the second dielectric layer 13 which were expressed by the formula $(Ce\text{-}F)_{x1}D1_{100\text{-}x1}$ (mol%), wherein x1 = 50, and $In_2O_3$, $Y_2O_3$, $Dy_2O_3$, $HfO_2$, $(ZrO_2)_{25}(SiO_2)_{25}$ and $(ZrO_2)_{25}(Y_2O_3)_{25}$ were selected as D1 in other working examples.

These information recording mediums were assigned disk Nos. 1-102 to 1-107.

Ce-F dielectrics were used the second dielectric layer 13 which were expressed by the formula $(Ce\text{-}F)_{x1}D1_{x2}D_{100\text{-}x1\text{-}x2}$ (mol%), wherein x1 = 50, x2 = 25 and $In_2O_3$ was selected as D1, and $Si_3N_4$, $YF_3$ and $(Si_3O_4)_{15}(YF_3)_{10}$ were selected as D in other working examples. These information recording mediums are assigned disk Nos. 1-108 to 1-110.

Ce-F dielectrics were used the second dielectric layer 13 which were expressed by the formula $(Ce\text{-}F)_{x1}D2_{100\text{-}x1}$ (mol%), wherein x1 = 50, and A1N, $Si_3N_4$, and $(AlN)_{25}(Si_3N_4)_{25}$ were selected as D2 in other working examples. These information recording mediums are assigned disk Nos. 1-111 to 1-113.

Ce-F dielectrics were used the second dielectric layer 13 which were expressed by the formula $(Ce\text{-}F)_{x1}D2_{x3}D3_{100\text{-}x1\text{-}x3}$ (mol%), wherein x1 = 50, x3 = 25 and $Si_3N_4$ was selected as D2, $YF_3$ was selected as D3 in another working example. This information recording medium is assigned disk No. 1-114.

Ce-F dielectrics were used the second dielectric layer 13 which are expressed by the formula $(CeF)_{x1}D3_{100\text{-}x1}$ (mol%), wherein x1 = 50, $YF_3$, $TbF_3$, and $(YF_3)_{25}(TbF_3)_{25}$ were selected as D3 in other working examples. These information recording mediums are assigned disk Nos. 1-115 to 1-117.

Also, to compare the repeated re-write performance when a conventional second dielectric layer was used, an information recording medium (assigned disk No. 1-000) in which $(ZnS)_{80}(SiO_2)_{20}$ was used as the second dielectric layer was produced, and was evaluated in the same manner.

Table 1 gives the evaluation results.

(Table 1)

| Disk No. | Material of Second Dielectric layer | Adhesion to Reflective Layer | Re-write performance |
|---|---|---|---|
| 1-101 | $CeF_3$ | no corrosion & no separation | 10000 or more |
| 1-102 | $(CeF_3)_{50}(In_2O_3)_{50}$ | no corrosion & no separation | 10000 or more |
| 1-103 | $(CeF_3)_{50}(Y_2O_3)_{50}$ | no corrosion & no separation | 10000 or more |
| 1-104 | $(CeF_3)_{50}(Dy_2O_3)_{50}$ | no corrosion & no separation | 10000 or more |
| 1-105 | $(CeF_3)_{50}(HfO_2)_{50}$ | no corrosion & no separation | 10000 or more |
| 1-106 | $(CeF_3)_{50}(ZrO_2)_{25}(SiO_2)_{25}$ | no corrosion & no separation | 10000 or more |
| 1-107 | $(CeF_3)_{50}(ZrO_2)_{25}(Y_2O_3)_{25}$ | no corrosion & no separation | 10000 or more |
| 1-108 | $(CeF_3)_{50}(In_2O_3)_{25}(Si_3N_4)_{25}$ | no corrosion & no separation | 10000 or more |
| 1-109 | $(CeF_3)_{50}(In_2O_3)_{25}(YF_3)_{25}$ | no corrosion & no separation | 10000 or more |
| 1-110 | $(CeF_3)_{50}(In_2O_{3)25}(SiN_4)_{15}(YF_3)_{10}$ | no corrosion & no separation | 10000 or more |

(continued)

| Disk No. | Material of Second Dielectric layer | Adhesion to Reflective Layer | Re-write performance |
|---|---|---|---|
| 1-111 | $(CeF_3)_{50}(A1N)_{50}$ | no corrosion & no separation | 10000 or more |
| 1-112 | $(CeF_3)_{50}(Si_3N_4)_{50}$ | no corrosion & no separation | 10000 or more |
| 1-113 | $(CeF_3)_{50}(AlN)_{25}(Si_3N_4)_{25}$ | no corrosion & no separation | 10000 or more |
| 1-114 | $(CeF_3)_{50}(Si_3N_4)_{25}(YF_3)_{25}$ | no corrosion & no separation | 10000 or more |
| 1-115 | $(CeF_3)_{50}(YF_3)_{50}$ | no corrosion & no separation | 10000 or more |
| 1-116 | $(CeF_3)_{50}(TbF_3)_{50}$ | no corrosion & no separation | 10000 or more |
| 1-117 | $(CeF_3)_{50}(YF_3)_{25}(TbF_3)_{25}$ | no corrosion & no separation | 10000 or more |
| 1-000 | $(ZnS)_{80}(SiO_2)_{20}$ | many circular corrosion occur | 10000 or more |

As shown in Table 1, in regard to adhesion, there was no separation or corrosion of the reflective layer 12 with any of the information recording mediums 1 of this working example, and the results were greatly improved over those obtained for the conventional example 1-100. In other words, this indicates that there was no reactivity between silver and any of the Ce-F dielectrics used for the second dielectric layer in this working example, which would have otherwise adversely affected the characteristics of the information recording medium.

Also, the repeated re-write characteristics of all of the information recording mediums 1 in this working example remained on a par with those of the conventional example, and 10,000 or more re-writes were possible. When an information recording medium is used to store images, audio and moving images, it will preferably be capable of 1000 re-writes, and when it is used as an external memory for a computer, it will preferably be capable of 10,000 re-writes. In other words, the information recording mediums 1 of this working example could all be used as an external memory for a computer.

Thus, the present invention provides an information recording medium having performance superior to that attainable in the past.

Working Example 2

In this working example, $(Ce-F)_{x1}D1_{100-x1}$, $(Ce-F)_{x1}D1_{x2}D_{100-x1-x2}$, $(Ce-F)_{x1}D2_{100-x1}$, $(Ce-F)_{x1}D2_{x3}D3_{100-x1-x3}$, and $(Ce-F)_{x1}D3_{100-x1}$ , wherein x1 = 50, x2 = 25, x3 = 25, other than the compositions given in Working Example 1, were used as the second dielectric layer 13 in the information recording medium 1 given in Working Example 1 (for example, $(CeF_3)_{50}(Ta_2O_5)_{50}$).

Just as in Working Example 1, the adhesion to the reflective layer 12 and the repeated re-write performance were evaluated.

As a result, in no case was there any separation or corrosion. Also, good repeated re-write performance was obtained in every case, with the number of re-writes being 5000 or more. In particular, when a material selected from among $SiO_2$ $Ga_2O_3$, $Y_2O_3$, $ZrO_2$, $In_2O_3$, $Dy_2O_3$, $HfO_2$, and $Ta_2O_5$ was used as D1, in every case the number of re-writes was 10,000 or more, meaning that the repeated re-write performance was extremely good.

Working Example 3

In this working example, $(CeF_3)_{x1}(In_2O_3)_{100-x1}$, $(CeF_3)_{x1}(Y_2O_3)_{100-x1}$, $(CeF_3)_{x1}(Si_3N_4)_{100-x1}$, and $(CeF_3)_{x1}(TbF_3)_{100-x1}$ were used as the second dielectric layer 13 in the information recording medium 1 given in Working Example 1. The compositional ratio x1 was varied among the Ce-F dielectrics to produce information recording mediums Nos. 1-201 to 1-212, and adhesion to the reflective layer 12 and repeated re-write characteristics were evaluated just as in Working Example 1.

Table 2 gives the evaluation results.

(Table 2)

| Disk No. | Material of Second Dielectric Layer | Adhesion to reflective layer | Re-write performance |
|---|---|---|---|
| 1-201 | $(CeF_3)_5(In_2O_3)_{95}$ | no corrosion & no separation | 7000 times |
| 1-202 | $(CeF_3)_{10}(In_2O_3)_{90}$ | no corrosion & no separation | 10000 times or more |

(continued)

| Disk No. | Material of Second Dielectric Layer | Adhesion to reflective layer | Re-write performance |
|---|---|---|---|
| 1-102 | $(CeF_3)_{50}(In_2O_3)_{50}$ | no corrosion & no separation | 10000 times or more |
| 1-203 | $(CeF_3)_{90}(In_2O_3)_{10}$ | no corrosion & no separation | 10000 times or more |
| 1-204 | $(CeF_3)_5(Y_2O_3)_{95}$ | no corrosion & no separation | 9000 times |
| 1-205 | $(CeF_3)_{10}(Y_2O_3)_{90}$ | no corrosion & no separation | 10000 times or more |
| 1-103 | $(CeF_3)_{50}(Y_2O_3)_{50}$ | no corrosion & no separation | 10000 times or more |
| 1-206 | $(CeF_3)_{90}(Y_2O_3)_{10}$ | no corrosion & no separation | 10000 times or more |
| 1-207 | $(CeF_3)_5(Si_3N_4)_{95}$ | no corrosion & no separation | 6000 times |
| 1-208 | $(CeF_3)_{10}(Si_3N_4)_{90}$ | no corrosion & no separation | 10000 times or more |
| 1-112 | $(CeF_3)_{50}(Si_3N_4)_{50}$ | no corrosion & no separation | 10000 times or more |
| 1-209 | $(CeF_3)_{90}(S1_3N_4)_{10}$ | no corrosion & no separation | 10000 times or more |
| 1-210 | $(CeF_3)_5(TbF_3)_{95}$ | no corrosion & no separation | 5000 times |
| 1-211 | $(CeF_3)_{10}(TbF_3)_{90}$ | no corrosion & no separation | 10000 times or more |
| 1-116 | $(CeF_3)_{50}(TbF_3)_{50}$ | no corrosion & no separation | 10000 times or more |
| 1-212 | $(CeF_3)_{90}(TbF_3)_{10}$ | no corrosion & no separation | 10000 times or more |

As shown in Table 2, in regard to adhesion, no separation or corrosion occurred in the reflective layer 12 in any of the information recording mediums 1 in this working example. Also, good repeated re-write performance was obtained with all of the information recording mediums 1, with the number of re-writes being 5000 or more, indicating that these can be used as an information recording medium for storing images, audio, and moving images. When a medium is used as an external memory for a computer, the $CeF_3$ content is preferably at least 10 mol%.

Working Example 4

In Working Example 4, $(CeF_3)_{x1}(In_2O_3)_{x2}(Si_3N_4)_{100-x1-x2}$ and $(CeF_3)_{x1}(Si_3N_4)_{x3}(YF_3)_{100-x1-x3}$ were used as the second dielectric layer 13 in the information recording medium 1 given in Working Example 1. The compositional ratio x1 was 30 and x2 and x3 were varied to produce information recording mediums Nos. 1-301 to 1-308, which were evaluated for adhesion to the reflective layer 12 and repeated re-write characteristics in the same manner as in Working Example 1.
Table 3 gives the evaluation results.

(Table 3)

| Disk No. | Material of Second Dielectric Layer | Adhesion to reflective layer | Re-write performance |
|---|---|---|---|
| 1-301 | $(CeF_3)_{30}(In_2O_3)_{10}(Si_3N_4)_{60}$ | no corrosion & no separation | 8000 times |
| 1-302 | $(CeF_3)_{30}(In_2O_3)_{20}(Si_3N_4)_{50}$ | no corrosion & no separation | 10000 times or more |
| 1-303 | $(CeF_3)_{30}(In_2O_3)_{30}(Si_3N_4)_{40}$ | no corrosion & no separation | 10000 times or more |
| 1-304 | $(CeF_3)_{30}(In_2O_3)_{50}(Si_3N_4)_{20}$ | no corrosion & no separation | 10000 times or more |
| 1-305 | $(CeF_3)_{30}(Si_3N_4)_{10}(YF_3)_{60}$ | no corrosion & no separation | 6000 times |
| 1-306 | $(CeF_3)_{30}(Si_3N_4)_{20}(YF_3)_{50}$ | no corrosion & no separation | 10000 times or more |
| 1-307 | $(CeF_3)_{30}(Si_3N_4)_{30}(YF_3)_{40}$ | no corrosion & no separation | 10000 times or more |
| 1-308 | $(CeF_3)_{30}(Si_3N_4)_{50}(YF_3)_{20}$ | no corrosion & no separation | 10000 times or more |

As shown in Table 3, in regard to adhesion, no separation or corrosion occurred in the reflective layer 12 in any of the information recording mediums 1 in this working example. Also, good repeated re-write performance was obtained with all of the information recording mediums 1, with the number of re-writes being 5000 or more, indicating that these can be used as an information recording medium for storing images, audio and moving images. When a medium is used as an external memory for a computer, the $Si_3N_4$ content is preferably at least 50 mol% in $(CeF_3)_{x1}(In_2O_3)_{x2}(Si_3N_4)_{100-x1-x2}$, and the $YF_3$ content is preferably at least 50 mol% in $(CeF_3)_{x1}(Si_3N_4)_{x3}(YF_3)_{100-x1-x3}$, that is, $x1 + x2 \geq 50$, and $x1 + x3 \geq 50$ is preferably.

Working Example 5

In this working example, an example of an information recording medium 2 will be described.
The various layers of the information recording medium 2 were formed by the same methods as in Working Example 1. In this working example, however, a Ce-F dielectric expressed by the formula $(Ce-F)_{x1}D1_{100-x1}$ (mol%) was used for the second dielectric layer 13. Either $In_2O_3$ or $Y_2O_3$ was selected as D1, and the compositional ratio x1 was varied in each of the Ce-F dielectrics to produce information recording mediums Nos. 2-102 to 2-108, which were evaluated for adhesion to the recording layer.
Table 4 gives the evaluation results.

(Table 4)

| Disk No. | Material of Second Dielectric Layer | Adhesion to Recording layer |
|---|---|---|
| 2-101 | $(CeF_3)_{10}(In_2O_3)_{90}$ | no corrosion & no separation |
| 2-102 | $(CeF_3)50(In_2O_3)_{50}$ | no corrosion & no separation |
| 2-103 | $(CeF_3)_{90}(In_2O_3)_{10}$ | no corrosion & no separation |
| 2-104 | $(CeF_3)_{95}(In_2O_3)_5$ | separation occur & no corrosion |
| 2-105 | $(C_CF_3)_{10}(Y_2O_3)_{90}$ | no corrosion & no separation |
| 2-106 | $(CeF_3)_{50}(Y_2O_3)_{50}$ | no corrosion & no separation |
| 2-107 | $(CeF_3)_{90}(Y_2O_3)_{10}$ | no corrosion & no separation |
| 2-108 | $(CeF_3)_{95}(Y_2O_3)_5$ | separation occur & no corrosion |

As shown in Table 4, no corrosion of the reflective layer 12 occurred in any of the information recording mediums 2 in this working example. Also, no separation occurred in the information recording mediums 2 whose $CeF_3$ content was 90 mol% or lower.
Separation did occur when the $CeF_3$ content was over 90 mol%. It is therefore preferable for the $CeF_3$ content to be 90 mol% or less. Also, no corrosion of the recording layer 15 occurred, just as with the above results, with $TeOx + M3$ (where M3 is an element such as palladium or germanium).

Working Example 6

In this working example, an example of an information recording medium 3 will be described.
The information layer of the information recording medium 3 is formed by the same methods as in Working Example 1. In this working example, however, $(CeF_3)_{50}(In_2O_3)_{50}$, $(CeF_3)_{50}(Y_2O_3)_{50}$, $(CeF_3)_{50}(Si_3N_4)_{50}$, and $(CeF_3)_{50}(TbF_3)_{50}$ were used for the second dielectric layer 13. These information recording mediums is Nos. 3-101 to 3-104, respectively.
Next, an optical separation layer 31 provided with a guide groove was formed on the information layer 302. Then, the information layer 301 was formed on the optical separation layer 31. The information layer 301 was formed by sputtering $TiO_2$ as the transmissivity adjustment layer 32 (21 nm) (approximately equal to $(11/80)\lambda/n$)), an Ag-Pd-Cu film as the reflective layer 33 (10 nm), a $ZrO_2$-SiO-$Ga_2O_3$ film (more specifically, expressed by the formula $(Zr0_2)_{25}(SiO_2)_{25}(Ga_2O_3)_{50}$ (mol%)) as the second dielectric layer 34, a Ge-Bi-Te-Sn film (more specifically, expressed by the formula $Ge_{42.7}Bi_{4.1}Te_{51.0}Sn_{2.2}$ (atom%) as the recording layer 35 (6 nm), a $ZrO_2$-$SiO_2$-$Cr_2O_3$ film (more specifically, expressed by the formula $(ZrO_2)_{25}(SiO_2)_{25}(Cr_2O_3)_{50}$ (mol%) as the interface layer 36 (5 nm), and a ZnS-$SiO_2$ film (more specifically, expressed by the formula $(ZnS)_{80}(SiO_2)_{20}$ (mol%) as the first dielectric layer 37, in that order. Finally, the first dielectric layer 37 was coated with a UV-setting resin, a polycarbonate substrate (with a diameter of 120 mm and a thickness of 70 $\mu$m) was adhered thereto, and subjected to spin coating, after which the resin was cured with UV rays to form a cover layer 18 and produce an information recording medium 3.
The thickness of the second dielectric layer 34 and the first dielectric layer 37 was determined by calculation based on the matrix method. More specifically, it was determined such that when a laser beam of 405 nm was incident, the reflectivity of the information recording medium when the recording layer 35 was in the crystal phase (reflection by the mirror surface of the substrate) would be 4 to 10%, the reflectivity of the information recording medium when the recording layer 35 was in the amorphous phase (reflection by the mirror surface of the substrate) would be 1 to 5%, and the transmissivity $T_c$ (%) and transmissivity $T_a$ (%) would both be 45 to 55%.

The information recording mediums 3 produced in this way (disk Nos. 3-101 to 3-104) were evaluated for adhesion to the reflective layer 12 and the second dielectric layer 13, and for the repeated re-write performance of the information layer 302. Also, just as in Working Example 1, an information recording medium (assigned disk No. 3-000) in which conventional $(ZnS)_{80}(SiO_2)_{20}$ was used as the second dielectric layer 13 was produced and compared.

Table 5 gives the evaluation results.

(Table 5)

| Disk No. | Material of Second Dielectric Layer 13 | Adhesion to Reflective Layer 12 | Re-write performance of Information Layer |
|---|---|---|---|
| 3-101 | $(CeF_3)_{50}(In_2O_3)_{50}$ | no corrosion & no separation | 10000 times or more |
| 3-102 | $(CeF_3)_{50}(Y_2O_3)_{50}$ | no corrosion & no separation | 10000 times or more |
| 3-103 | $(CeF_3)_{50}(Si_3N_4)_{50}$ | no corrosion & no separation | 10000 times or more |
| 3-104 | $(CeF_3)_{50}(TbF_3)_{50}$ | no corrosion & no separation | 10000 times or more |
| 3-000 | $(ZnS)_{80}(SiO_2)_{20}$ | many circular corrosion occur | 10000 times or more |

As shown in Table 5, in regard to adhesion, no corrosion of the reflective layer 12 occurred in any of the information recording mediums 3 in this working example and the results were greatly improved over those obtained for the conventional example 3-000.

Also, the repeated re-write characteristics of all of the information recording mediums 3 in this working example remained on a par with those of the conventional example, and 10,000 or more re-writes were possible. That is, the information recording mediums 1 of this working example could all be used to store images, audio and moving images, and as an external memory for a computer.

Working Example 7

In this working example, an example of using a Ce-F dielectric expressed by the formula $(Ce-F)_{x1}D1_{100-x1}$ (mol%) for the dielectric layer 34 in the information recording mediums discussed in Working Example 6 will be described. Either $In_2O_3$ or $Y_2O_3$ was selected as D1, and the compositional ratio x1 was varied in each of the Ce-F dielectrics to produce information recording mediums Nos. 4-102 to 4-108, which were evaluated for adhesion to the recording layer 35.

Table 6 gives the evaluation results.

(Table 6)

| Disk No. | Material of Dielectric layer 34 | Adhesion to Recording layer 35 |
|---|---|---|
| 4-101 | $(CeF_3)_{10}(In_2O_3)_{90}$ | no corrosion & no separation |
| 4-102 | $(CeF_3)_{50}(In_2O_3)_{50}$ | no corrosion & no separation |
| 4-103 | $(CeF_3)_{90}(In_2O_3)_{10}$ | no corrosion & no separation |
| 4-104 | $(CeF_3)_{95}(In_2O_3)_5$ | separation occur & no corrosion |
| 4-105 | $(CeF_3)_{10}(Y_2O_3)_{90}$ | no corrosion & no separation |
| 4-106 | $(CeF_3)_{50}(Y_2O_3)_{50}$ | no corrosion & no separation |
| 4-107 | $(CeF_3)_{90}(Y_2O_3)_{10}$ | no corrosion & no separation |
| 4-108 | $(CeF_3)_{95}(Y_2O_3)_5$ | separation occur & no corrosion |

As shown in Table 6, no corrosion of the recording layer 35 occurred in any of the information recording mediums in this working example. Also, no separation occurred in the information recording mediums whose $CeF_3$ content was 90 mol% or lower. Separation did occur when the $CeF_3$ content was over 90 mol%. It is therefore preferable for the $CeF_3$ content to be 90 mol% or less. Also, no corrosion of the recording layer 35 occurred, just as with the above results, with TeOx + M3 (where M3 is an element such as palladium or germanium).

As described above, the present invention can provide a dielectric material that contains no sulfur, has good transparency to a laser in the blue-purple wavelength band, and has excellent moisture resistance. Furthermore, if this dielectric material is applied to the second dielectric layer, there will be no need for a third interface layer, and an information recording medium with high signal quality and excellent repeated re-write characteristics can be provided. Examples were given above to illustrate embodiments of the present invention, but the present invention is not limited to the embodiments given above, and can be applied to other embodiments based on the technological concept of the present invention.

Industrial Applicability

The information recording medium, and method for manufacturing the same, of the present invention are useful in large-capacity optical information recording mediums that require a dielectric layer having excellent characteristics, such as a Blue-ray Disc. They can also be applied to small-diameter disks (such as those with a diameter of 6 cm). Furthermore, they are useful in electrical information recording mediums, such as electrical switching elements. In any case, the present invention can be applied regardless of whether the medium is a rewritable type, a write-once type, or a read-only type.

**Claims**

1. An information recording medium for recording or reproducing information, said information recording medium comprising a layer that contains Ce-F.

2. The information recording medium according to Claim 1, wherein the layer that contains Ce-F is a dielectric layer.

3. The information recording medium according to Claim 2, comprising a substrate, a reflective layer, the dielectric layer, and a recording layer, in this order, and
the reflective layer and the dielectric layer are in contact.

4. The information recording medium according to Claim 2, said information recording medium including two or more information layers,
wherein at least one of the information layers comprises a substrate, a reflective layer, the dielectric layer, and a recording layer, in this order,
the reflective layer and the dielectric layer are in contact, and
the two or more information layers are separated from one another by an optical separation layer.

5. The information recording medium according to any of Claims 2 to 4, wherein the dielectric layer contains at least 10 mol% CeF.

6. The information recording medium according to any of Claims 2 to 5, wherein the dielectric layer further contains a dielectric material D1 that is an oxide of at least one element selected from the group consisting of aluminum, silicon, titanium, zinc, gallium, yttrium, zirconium, indium, lanthanum, cerium, dysprosium, ytterbium, hafnium, and tantalum.

7. The information recording medium according to Claim 6, wherein the dielectric layer further contains a dielectric material D1 that is an oxide of at least one element selected from the group consisting of silicon, gallium, yttrium, zirconium, indium, dysprosium, hafnium, and tantalum.

8. The information recording medium according to Claim 5 or 7,
wherein the dielectric layer is expressed by the formula:

$$(\mathrm{Ce\text{--}F})_{x1}\mathrm{D1}_{100-x1},$$

where x1 satisfies $10 \leq x1 \leq 90$.

9. The information recording medium according to any of Claims 2 to 5, wherein the dielectric layer further contains a dielectric material D2 that is an nitride of at least one element selected from the group consisting of aluminum, boron, yttrium, and silicon.

10. The information recording medium according to Claim 9, wherein the dielectric layer is expressed by the formula:

$$(Ce\text{–}F)_{x1}D2_{100-x1},$$

where x1 satisfies $10 \leq x1 \leq 90$.

11. The information recording medium according to any of Claims 2 to 5, wherein the dielectric layer further contains a dielectric material D3 that is a fluoride of at least one element selected from the group consisting of magnesium, yttrium, lanthanum, gadolinium, terbium, and ytterbium.

12. The information recording medium according to Claim 11, wherein the dielectric layer further contains a dielectric material D3 that is a fluoride of at least one element selected from the group consisting of yttrium, and lanthanum.

13. The information recording medium according to Claim 11 or 12,
wherein the dielectric layer is expressed by the formula:

$$(Ce\text{–}F)_{x1}D3_{100-x1},$$

where x1 satisfies $10 \leq x1 \leq 90$.

14. The information recording medium according to any of Claims 2 to 5, wherein the dielectric layer further contains a plurality of a dielectric material D1 that is an oxide of at least one element selected from the group consisting of aluminum, silicon, titanium, zinc, gallium, yttrium, zirconium, indium, lanthanum, cerium, dysprosium, ytterbium, hafnium, and tantalum; a dielectric material D2 that is an nitride of at least one element selected from the group consisting of aluminum, boron, yttrium, and silicon; and a dielectric material D3 that is a fluoride of at least one element selected from the group consisting of magnesium, yttrium, lanthanum, gadolinium, terbium, and ytterbium.

15. The information recording medium according to Claim 14, wherein the dielectric layer is expressed by the formula:

$$(Ce\text{-}F)_{x1}D1_{x2}\,D1_{100-x1-x2},$$

where D is a dielectric material of at least one selected from the group consisting of the dielectric material D2 and the dielectric material D3), and x1 and x2 satisfy $10 \leq x1 \leq 90$ and $50 \leq x1 + x2 < 100$.

16. The information recording medium according to Claim 14, wherein the dielectric layer is expressed by the formula:

$$(Ce\text{-}F)_{x1}D2_{x3}\,D3_{100-x1-x3},$$

where x1 and x3 satisfy $10 \leq x1 \leq 90$ and $50 \leq x1 + x3 < 100$.

17. A method for manufacturing an information recording medium for recording or reproducing information, comprising a substrate, a reflective layer, a dielectric layer, and a recording layer, in this order,
wherein the dielectric layer is formed so as to be in contact with the reflective layer, using a sputtering target that contains Ce-F.

18. The method for manufacturing an information recording medium according to Claim 17, wherein the sputtering target contains any one of dielectric materials of a dielectric material D1 that is an oxide of at least one element selected from the group consisting of aluminum, silicon, titanium, zinc, gallium, yttrium, zirconium, indium, lanthanum, cerium, dysprosium, ytterbium, hafnium, and tantalum; a dielectric material D2 that is an nitride of at least one element selected from the group consisting of aluminum, boron, yttrium, and silicon; and a dielectric material D3 that is a fluoride of at least one element selected from the group consisting of magnesium, yttrium, lanthanum, gadolinium, terbium, and ytterbium.

# Fig.1

# Fig.2

2

| | 11 |
| 12 |
| 13 |
| 15 |
| 16 |
| 17 |
| 18 |

19

# Fig.3

# Fig.4

## INTERNATIONAL SEARCH REPORT

| International application No. |
|---|
| PCT/JP2005/018965 |

A. CLASSIFICATION OF SUBJECT MATTER
*G11B7/257*(2006.01), *G11B7/254*(2006.01), *G11B7/26*(2006.01)

According to International Patent Classification (IPC) or to both national classification and IPC

B. FIELDS SEARCHED

Minimum documentation searched (classification system followed by classification symbols)
G11B7/254, G11B7/257, G11B7/26

Documentation searched other than minimum documentation to the extent that such documents are included in the fields searched
Jitsuyo Shinan Koho          1922-1996     Jitsuyo Shinan Toroku Koho    1996-2006
Kokai Jitsuyo Shinan Koho    1971-2006     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-341241 A  (Matsushita Electric Industrial Co., Ltd.), 03 December, 2003 (03.12.03), Claims 1 to 14, 25 to 32; Par. Nos. [0021], [0070] to [0082], [0125] to [0139]; Fig. 4 & US 2003/0190447 A1    & EP 1351229 A2 & CN 1445770 A | 1-18 |
| X | JP 2004-310992 A  (Matsushita Electric Industrial Co., Ltd.), 04 November, 2004 (04.11.04), Par. Nos. [0007], [0077]; Fig. 1 & US 2004/0191683 A    & EP 1463043 A1 | 1-2,5-16 |

[X] Further documents are listed in the continuation of Box C.      [ ] See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 January, 2006 (05.01.06) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/018965 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-367222 A (Hitachi, Ltd.), 20 December, 2002 (20.12.02), Full text; all drawings (Family: none) | 1-18 |
| A | JP 2001-101712 A (Hitachi, Ltd.), 13 April, 2001 (13.04.01), Full text; all drawings (Family: none) | 1-18 |
| A | JP 64-78444 A (Nippon Telegraph And Telephone Corp.), 23 March, 1989 (23.03.89), Full text; all drawings (Family: none) | 1-18 |
| A | JP 62-76037 A (Nippon Telegraph And Telephone Corp.), 08 April, 1987 (08.04.87), Full text; all drawings (Family: none) | 1-18 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06090808 B

- JP 2003323743 A